Europäisches Patentamt

European Patent Office

Office européen des brevets

(11) Publication number: **0 283 076**
**A1**

## (12) EUROPEAN PATENT APPLICATION

(21) Application number: 88200379.1

(51) Int. Cl.⁴: **B60S 5/04**

(22) Date of filing: 02.03.88

(30) Priority: 02.03.87 DK 1061/87
10.07.87 DK 3575/87

(43) Date of publication of application:
**21.09.88 Bulletin 88/38**

(84) Designated Contracting States:
**AT BE CH DE ES FR GB GR IT LI NL SE**

(71) Applicant: **Hansen, Arne Hjorth**
**Virringvej 2**
**DK-8660 Skanderborg(DK)**

(72) Inventor: **Hansen, Arne Hjorth**
**Virringvej 2**
**DK-8660 Skanderborg(DK)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) **An apparatus for inflating car tires.**

(57) It has been found that ordinary car tires, after a repair or when new-mounted, can be inflated to a desired pressure by one continous inflation blow when the volume of the tire and the applied inflation pressure are known values, whereby time consuming intermediate control measurements can be avoided. Accordingly there is provided an inflation apparatus having a timer controlled valve (24) inserted between the tire (12) and a source of pressurized air, and the apparatus comprises a control unit (42) to be set in accordance with the volume of the tire to be inflated. The tire may even be inflated to a desired test overpressure and then automatically be bleeded to the desired operative pressure.

FIG. 1

# An apparatus for inflating car tires.

The present invention relates to an apparatus for controlled inflation af pneumatic tires. In order to effect a reasonably rapid inflation of a tire it is necessary to make use of a source of pressurized air, in which the air pressure is rather much higher than aimed at in the tire, and for that reason, as well known, it is impossible with ordinary equipment to measure the tire pressure during the inflation. If a manometer is arranged in connection with the inflation hose it is necessary to stop the inflation from time to time and keep an inflation pause, during which the air pressure is equalized in the tire and hose system to enable a steady and true reading of the meter. In repair shops it frequently happens that a repaired or newly mounted tire should be inflated from ambient pressure e.g. to 2 bars, and even with the use of an inflation air pressure of some 8 bars the operation takes a considerable time, both for the actual inflation and for the required inflation or measuring pauses.

Such pauses are not required as long as the operator can feel that the tire has not yet become stiff, but once the tire is felt stiff there is still a considerable inflation to be carried out, and the operator cannot feel on the tire whether the correct higher pressure has been attained nor whether perhaps a much higher pressure is built up, even to a degree of explosion danger. Such danger should be avoided by all means, and it is particularly important, therefore, that the operator makes use of several measuring pauses, particularly towards the end of the inflation operation. On the other hand, these several pauses account for a large part of the duration of the inflation work.

As disclosed in my US Patent No. 4.510.979 it is possible to design an inflation apparatus which will automatically take care of a correct inflation by providing for the necessary measuring pauses in connection with the use of a contact manometer, whereby the operator need not attend to the inflation process once the apparatus has been started, but of course such an apparatus is relatively expensive, and it still requires a relatively long total inflation time for each tire, i.e. it has a correspondingly limited capacity.

It is the purpose of this invention to provide an apparatus which is capable of inflating tires with a high capacity, i.e. relatively fast for each single tire, without the operator having to attend to the process, and without the apparatus being complicated in any way.

The invention is based on the finding that in practice all or at least the vast majority of tires and tire tubes produced by different manufacturers throughout the world are highly similar with respect to air throughflow characteristics of their air nipples. The outer diameter and the threading of the nipples are chosen according to an international standard for cooperation with standard inflating auxiliaries, but so far there has been no need for any standard with respect to the interior dimensioning of the nipples, except that the nipples should be provided with a valve cone acting as a check valve and having an actuator portion operable to be depressed by a central stub on a standard inflating connector head at the end of an inflation hose, such that it is possible to effect even a de-inflation from outside, or rather so as to enable a deinflation by a depression of the actuator portion by any relevant instrument or tool.

For readjusting the tire pressure it is common practice that the said valve cone is left in the inflation nipple, but for the total inflation of a repaired or newly monted tire it is common pratice to remove the valve cone insert in order to essentially increase the flowthrough capacity of the nipple such that the inflation may take place as rapidly as possible. Once the inflation is completed it is then necessary to demount the inflating connector head of the inflation hose and remount the cone unit the nipple, whereby it is in practice unavoidable that some air escapes from the tire. However, it is generally desired or prescribed that a repaired or newly mounted tire should be initially inflated to a pressure somewhat above the desired operational pressure such that the tire and its mounting is suitable tested by an overpressure, and if this over-inflation is driven up to some 3,5 bars as prescribed, then the air escape by the said remounting of the valve cone will be connected, by way of experience, with a pressure drop to a value very close to the desired operational pressure. Thus, it is sufficient to thereafter carry out a fine manually controlled adjustment of the final tire pressure, which can be done in few seconds.

Even with the valve cones inserted or removed, respectively, the flowthrough capacities of the different nipples are very much alike, and according to recent developments tires are now marketed, in which the valve cone is not retractable. Such tires, therefore, when inflated to the said overpressure, should be bleeded to the operational pressure by actuation of the valve cone, again with suitable pauses for control measuring.

According to the invention the said finding with respect to practically all current tire nipples having equal through-flow charactistics, irrespective of the tire dimensions, is utilised in the design of an inflation apparatus having a timer controlled valve and an associated timer, which may be preset in accordance with the volume of the tire to be inflated from ambient pressure, such that a tire of that particular size, with the use of a source of compressed air of a given pressure, will be inflated through an individual period of time which is just long enough to secure the attainment of the desired tire pressure. This could well be the operative pressure, but in connection with repairs or new mountings it will normally be the said test overpressure.

Due to the said equality there is a practically linear connection between the required inflation time and the volume of the tire generally for different tires even from different manufactures of tires or tire tubes, and when the said timer is properly adjusted to the volume, therefore, the inflation to the correct end pressure will thus be achievable in one uninterrupted blow, without any measuring pauses at all. Many experiments have shown that a remarkable inflation accuracy is obtainable in this manner, and at least for an inflation to the said overpressure it is not even necessary to make any control measurement, because the accuracy requirements are here not very high.

The inflation to the said overpressure applies to tires born with and without inserted valve cones. It has been found that there is a tight relationship between these conditions such that the said timer may still be preset in accordance with the volume of the tire to suit one of the conditions and then adjusted by a constant factor to suit the other condition. The inflation of a tire "with valve cone" will require an inflation time which is between 50 and 60% longer than for a tire "without valve cone", irrespective of the tire volume, and in practice, therefore, the apparatus may be provided with one read-in unit for the tire volume and one selector referring to the actual tire being "with or without valve cone".

It should be mentioned that the said constant relation between the tire volume and the required inflation time will of course not apply to all thinkable tires, but what is relevant here is the majority of tires of ordinary passenger cars. For the tire of heavy trucks or other groups of special vehicles the said relation may be different and thus require another adjustment of the inflation apparatus.

For the treatment of tires "with valve cone" it is a special circumstance that upon the inflation to the said overpressure the tire will be conveniently bleedable to the operational pressure through the same hose, through which the tire has been inflated, the connector portion of this hose having a connector head including a stub member for depressing the valve cone. The primary finding of the invention as to the equal characteristics of the different nipples, even "with cones", resulted in the assumption that also the required bleeding could be controlled on a pure time basis, without requiring several control measurements. Many experiments have shown that this assumption is true, such that in case of a tire "with valve cone" the tire may first be inflated to the required overpressure and thereafter be bleeded to the required operational pressure all based on a time controlled inflation and bleeding procedure. It has been found that the inflation and bleeding accuracy is hereby high enough to secure a final result which is indeed very near to the required operational pressure, such that the final pressure will need none or only one or a few control measurements in order to be adjusted correctly.

It has been found that in practice it is possible to design the inflation apparatus as a standard for use with a compressor producing an air pressure of 10 bars, this pressure being used widely as a pressure standard. However, as there is a well defined relation between the compressor pressure and the inflation time, the apparatus may well be provided with an adjustment button enabling the apparatus to be adjusted to some deviating inlet pressure.

In the following the invention is described in more detail with reference to the drawing, in which:

Fig. 1 is a schematic diagram of an apparatus according to the invention, while

Fig. 2 is a view of a lay-out of the front panel of the apparatus.

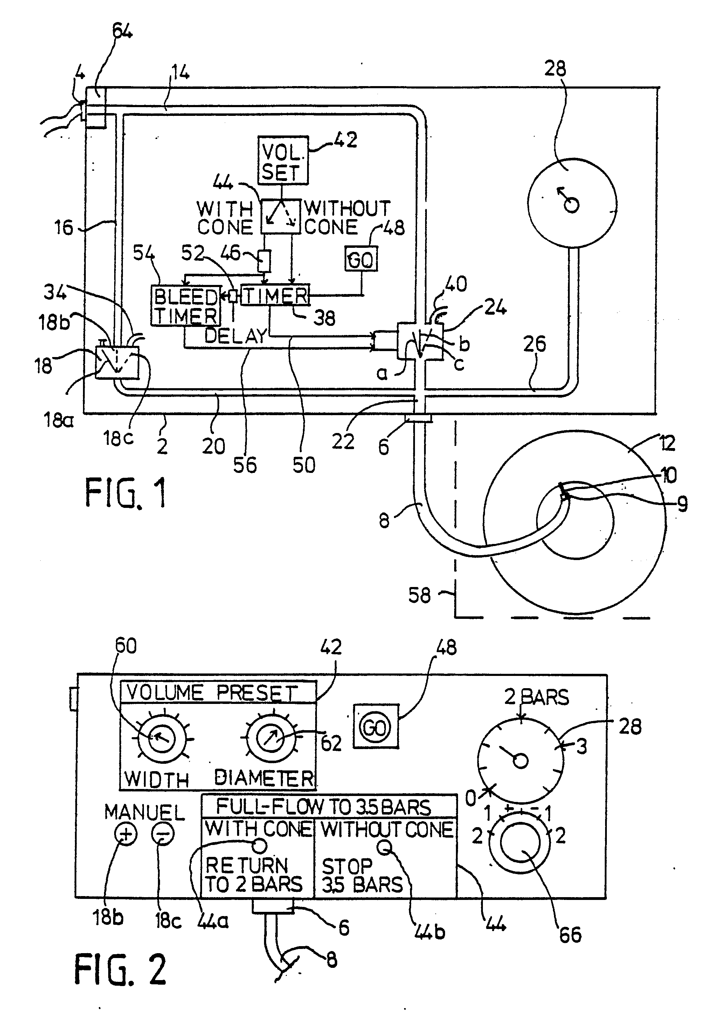

The apparatus according to fig. 1 comprises a housing having an inlet stub 4 for pressurized air from an external compressor and an outlet stub 6 for an inflator hose 8 for connection with the air nipple 10 of a tire 12. Inside the housing 2 the inlet stub 4 is connected with a pipe 14 having a branch pipe 16 leading to a manually operated three-way valve 18, through which the pipe 16 continues in a pipe 20, which communicates with a pipe 22 connected with the outlet stub 6. The pipe 14 is connected to another three-way valve 24, which is normally closed, and to a pipe 26 leading to a pressure gauge 28.

As long as the valve 24 is closed the apparatus thus described will constitute a conventional controlled inflation apparatus, in which the valve 18 is operable to furnish compressed air to the hose 8 through the pipes 16, 20 and 22. The schematically indicated valve member of the valve 18 has three positions 18a, 18b and 18c, of which 18a is a closed position, while 18b is an open position interconnecting the pipes 16 and 20. 18c is a bleeding position, in which the pipe 20 is connected with an open stub 34 on the valve 18. Thus, in position 18b of the valve member the tire is inflatable, while it is bleedable in position 18c.

For the present invention a major component is the valve 24, which is controllable by a timer 38 so as to cause the tire 12 to be inflated to a desired overpressure without any measuring pauses at all. The valve member of this valve has three positions, viz. a closed position a, an open inflation position b, in which the pipe 14 is connected with the hose 8, and an open bleeding position c, in which the hose 8 is connected with the atmosphere through a stub 40.

The timer 38 is preset according to the volume of the tire to be inflated. The volume may be read into a unit 42, which is connected with the timer 38 through a selector 44 to be set in accordance with the tire or tube nipple being "with/without cone". In the position "with cone" of this selector a resistor or another relevant unit 46 will be actuated to cause the timer to be adjusted to a time interval longer than the time preset with selector 44 in "without cone" position. In the latter case, when a start actuator 48 is operated, the timer 38 as connected with the valve 24 through a control wire 50 will actuate this vale to open in position b during the preset time and thereafter to close again. Hereby the tire is inflated to the desired or prescribed overpressure.

When the over-inflated tire has been inspected more or less the operator will remove the hose 8 from the nipple 10 and immediately insert the valve cone into the nipple, and by the associated outslip of air from the tire the pressure therein will drop to about the required final pressure. Thereafter the hose 8 may be mounted on the nipple 10 again, whereby the mouth piece of the hose, designated 9, will depress the cone and make it possible for the operator to adjust the pressure finally by means of the manually operable valve 18.

If the tire nipple is "with cone" the actuation signal to the valve 24 through the wire 50 will have increased duration, such that the required overpressure will be attained anyhow. When the inflation is stopped a signal from the timer 38 is passed to a delay unit 52 serving to start a bleed timer 54 with the associated desired delay. Also this timer 54 has been preset in accordance with the setting of the units 42 and 44, though only with the selector 44 in the "with cone" position, viz. so as to be set to a timing required for the tire to be bleeded from the attained overpressure to the desired final pressure. The timer 54, through a wire 56, actuates the valve 24 to open into position c, whereby the desired bleeding is achieved through the stub 40, inasfar as the said cone is steadily depressed by the mouthpiece 9 of the hose 8. When the apparatus has been proberly calibrated and the inlet air pressure on the stub 4 is kept constant the automatically obtained final pressure will often be so close to the desired final pressure that further adjustment by means of the manually operated valve 18 will not be necessary, but otherwise it will be easy to finely adjust the final pressure by means of that valve before the hose 8 is removed from the nipple 10.

Particularly the tires "with cone" will be inflatable to the desired overpressure and then bleedable to the desired final pressure while they are housed inside a safety cage as shown - schematically at 58 in fig. 1. Thus, the operator may ascertain that the tire is able to witstand the overpressure without coming close to the tire while it is overpressurized. This will amount to an important safety measure, because in some cases the overpressure results in a tire explosion which may be extremely dangerous to any nearby person.

Fig. 2 illustrates a possible layout of the front panel of an apparatus operating according to the description of fig. 1. The manual valve 18 is represented by two press buttons 18'b and 18'c, which are usable for inflation and bleeding, respectively, though as already known these two buttons may be combined as a single button operable to effect the two functions by respective degress of depression. The selector 44 comprises press buttons 44a and 44b for the required selection between "with cone" and "without cone". The pressure gauge 28 is illustrated as a pointer manometer having fixed indications for 2 or 3 bars. The starter button is represented at 48, and 42 designates the tire volume setting unit, which is shown to comprise two turnable buttons 60 and 62 for the reading in of the width and the diameter of the tire, respectively, whereby the combined setting of associated potentiometers will represent the volume of the tire, such as desclosed in the said earlier US-Patent No. 4.510.979, without even the volume itself being known.

If it is prescribed that the tire volume is read into the unit 42 before any of the buttons 44a or 44b is actuated, then the function of the starter button 48 may be taken over by each of the buttons 44a and 44b, whereby the button 48 may be avoided.

It will be appreciated that an apparatus according to the invention should not necessarily be able to perform all of the functions discussed above, since already the automatic full-flow or uninterrupted inflation of the tire to the desired or prescribed overpressure will constitute an important contribution,based on a volume conditioned time control of the inflation, and the design of the apparatus may be correspondingly simplified.

An important factor, of course, is the inlet pressure of the compressed air on the inlet stub 4. While an inlet pressure of ten bars is a widely used standard the actual inlet pressure could well sometimes deviate from the standard, and in such cases, of course, the apparatus should be correspondingly calibrated, either with respect to a throttling of the airflow or a general adjustment of the timing response of the timer/timers 38,54 to the setting of the unit/units 42,44. A throttling of the air flow may be obtained in various manners, e.g. with the use of different insert plugs for insertion into the inlet stub 4 for adaption of the apparatus to different inlet air pressures. Another possibility is to measure the air flow through the hose 8 with the hose end piece in a free condition and to adjust a control valve (not shown) in the pipe 14 to a setting, at which the flow corresponds to the standard flow as produced by a pressure source of 10 bars. Thereafter a few empiric adjustments may be made. Also, the pressure gauge 28 may be used as a guide for the adjustment of such a valve, when the air is exhausted freely through the mouth piece 9 or through a calibration nozzle inserted therein; if the apparatus is preadapted to an inlet pressure of ten bars the gauge 28 will respond to the air outlet through such a nozzle by a well defined reading when the inlet pressure is ten bars, and the control valve may be adjusted to effect this reading when the inlet pressure differs from the ten bars.

The apparatus, of course, could be combined with an air compressor and thus be preadapted closely to the pressure thereof.

According to a preferred arangement however, there is mounted adjacent the inlet 4, before or after the branch pipe 16, a pressure reduction valve 64 of the pressure regulating type, which is set to some suitable standard, preferably 8 bars, somewhat lower than the pressure supplied from the compressor. Commonly the supplied pressure will fluctuate, e.g. between 9 and 11 bars, and with an automatically stabilized pressure at e.g. 8 bars on the main valve 24 the achievable inflation accuracy by the time controlled operation of the valve is surprisingly high.

By way of example, with the use of an inflation pressure of 8 bars as controlled by a pressure regulating valve 60 the following inflation times have been found to be required:

1) Tire "without cone", inflation to overpressure 3,5 bars:

Tire $165 \times 13''$ : Inflation time 11,5 secs.

Tire $195 \times 14''$ : Inflation time 17,0 secs.

2) Tire "with cone", inflation to overpressure 3,5 bars and subsequent automatic deflation to 2 bars:

Tire $165 \times 13''$ : Inflation time 22.secs, delay (by unit 52) 0,5-1 sec.for enabling reading of gauge 28 at rest, subsequent bleeding time 15,0 secs.

Tire $195 \times 14''$ : Inflation time 31 secs., delay 0,5-1-sec., bleeding time 28 secs.

The accuracy has been found to be better than 0,2 bar.

With the relative very rapid operation og the device the device is well suited to be arranged in line with a tire changing or mounting machine, which cannot normally operate that fast.

In some countries such as Italy the inflation pressure is prescribed to af maximum less than the said 8 bars, although the tires are normally guaranteed to resist at least 10 bars. In such cases, of course, the pressure regulator 64 as well as the timer 38 should be adjusted accordingly.

It has been found practical to provide the device with a calibration button 66, fig. 2, by means of which an associated potentiometer may finely adjust the operation of the timer 38 and even the timer 54 when required. There may be some tolerance deviations in the volumes af tires of equal nominal volume, and if a whole series af truly similar tires is to be handled it is convenient to adjust the calibration button 66 if it is found that the first tire is not indflated fully correctly. The button should be reset before the handling of a new series of tires.

## Claims

1. An apparatus for inflating car tires, comprising a main valve having an inlet for connection with a source of pressurized air and an outlet for connection with a tire to be inflated, characterized in further comprising an adjustable timer unit for actuating said valve to open through a predeterminal time interval and a control unit operable to adjust the timer in accordance with the volume of the tire to be inflated, such that tires of similar types, but not different volumes are hereby inflated to substantially the same pressure by said predetermined time interval being related to the respective volumes.

2. An apparatus according to claim 1 and further comprising a pressure gauge connected with said valve outlet.

3. An apparatus according to claim 1 and further comprising a manually operable inflation/deflation valve bridging said main valve.

4. An apparatus according to claim 1, in which said control unit is of the type comprising means for reading in the tire volume in terms of width and diameter of the tire.

5. An apparatus according to claim 1 and further comprising a selector unit, which is switchable between respective positions representing tires "with cones" and "without cones" and is connected with the timer unit so as to effect a relevant adjustment of said time interval all according to the tire being with or without a cone in the air nipple thereof.

6. An apparatus according to claim 1, in which the control unit is adapted to keep the main valve open through a time interval sufficient to effect inflation of the tire to a test overpressure.

7. An apparatus according to claim 6, in which the control unit, when adjusted to "with cone" operation, is in operative connection with af bleed timer operable to actuate a bleeding valve for bleeding of the overpressurized tire to a normal pressure, said bleed timer being adjustable according to the setting of the control unit so as to effect the bleeding to the normal operational pressure fully automatically.

8. An apparatus according to claim 7, in which a delay unit is provided for causing the bleeding operation to be initiated with a desired delay upon the desired overpressure being reached.

9. An apparatus according to claim 7, in which the bleeding valve is intergrated with the said main valve.

10. An apparatus according to claim 1, in which the control unit comprises a manually operable actuator means for correcting the operation of the timer.

11. An apparatus according to claim 1 and further comprising an air pressure regulating unit interposed between the said unit and the said main valve for stabilizing the operative inflation pressure, e.g. at 8 bars.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 133 482 (MAHLE) <br> * whole document * <br> --- | 1 | B 60 S 5/04 |
| D,A | US-A-4 510 979 (HJORTH-HANSEN) <br> * whole document * <br> ----- | 1 | |

TECHNICAL FIELDS SEARCHED (Int. Cl.4)

B 60 S 5/00

The present search report has been drawn up for all claims

| Place of search | Date of completion of the search | Examiner |
|---|---|---|
| BERLIN | 20-05-1988 | STANDRING M A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

\.....................................................................................

& : member of the same patent family, corresponding document

EPO FORM 1503 03.82 (P0401)